# DEMANDE DE BREVET EUROPEEN

(11) **EP 1 056 282 A1**
(43) Date de publication de la demande: **29.11.2000**
(21) Numéro de dépôt: 00401464.3
(22) Date de dépôt: 25.05.2000
(51) Int. Cl.: H04N 5/38

(54) **Voie modulaire de traitement pour la réémission d'un signal radiofréquence de télévision analogique et numérique et système mettant en oeuvre cette voie de traitement**

(30) Priorité: 28.05.1999 FR 9906789
(71) Demandeur: TELEDIFFUSION DE FRANCE, 75015 Paris (FR)
(72) Inventeur: Depriester, Jacques, 57150 Creutzwald (FR)
(74) Mandataire: Fréchède, Michel

(57) **Abrégé**

Cette voie modulaire de traitement est destinée à la réémission d'un signal radiofréquence de télévision consistant en un signal émis sur un canal analogique N et en un signal émis sur un canal numérique adjacent inférieur N-1 ou supérieur N+1. Elle comporte un premier module (1,2,3) de transposition en fréquence intermédiaire fᵢ du signal radiofréquence, un circuit de filtrage passe-bande (4) transmettant sélectivement une bande de filtrage correspondant en fréquence centrale et en largeur de bande à celles du canal analogique N et une bande de filtrage correspondant en fréquence centrale et en largeur de bande à celles du canal numérique N-1 ou N+1, un deuxième module (7,8,9) de transposition en radiofréquence du signal à fréquence intermédiaire fᵢ traité, et une unité centrale (10) commandant les premier (1,2,3) et deuxième (7,8,9) modules.

## Description

La présente invention concerne une voie modulaire de traitement pour réémission d'un signal radiofréquence de télévision analogique et numérique de largeur de bande Fₛ.

Les voies de traitement de ce type, qui sont utilisées à l'heure actuelle, sont contenues dans les équipements de diffusion des sites de réémission des réseaux complémentaires de diffusion TV analogique.

Ces sites de réémission des réseaux complémentaires analogiques ont pour objet d'assurer les extensions nécessaires de couverture afin de desservir convenablement les zones à faible densité de population ou masquées par le relief. Ils sont le plus souvent desservis à partir des sites principaux de diffusion TV analogique ou constituent parfois des sites de réémission mis eux-mêmes en cascade.

Les équipements de diffusion des sites de réémission du réseau complémentaire analogique mettent en oeuvre plusieurs voies de traitement de canal analogique L-SECAM, en général au nombre de trois, qui retransmettent chacune, à partir d'une antenne commune de réémission, un programme TV analogique émis depuis le site principal et reçu à partir d'une antenne commune de réception.

Compte tenu de l'introduction progressive de la télédiffusion de la télévision numérique par réseau hertzien terrestre, les plans de fréquence d'émission ou de réémission attribués, actuellement, au réseau complémentaire analogique, sont tels qu'il est nécessaire d'utiliser tous les sites concernés pour assurer une zone de couverture identique en émission ou réémission numérique.

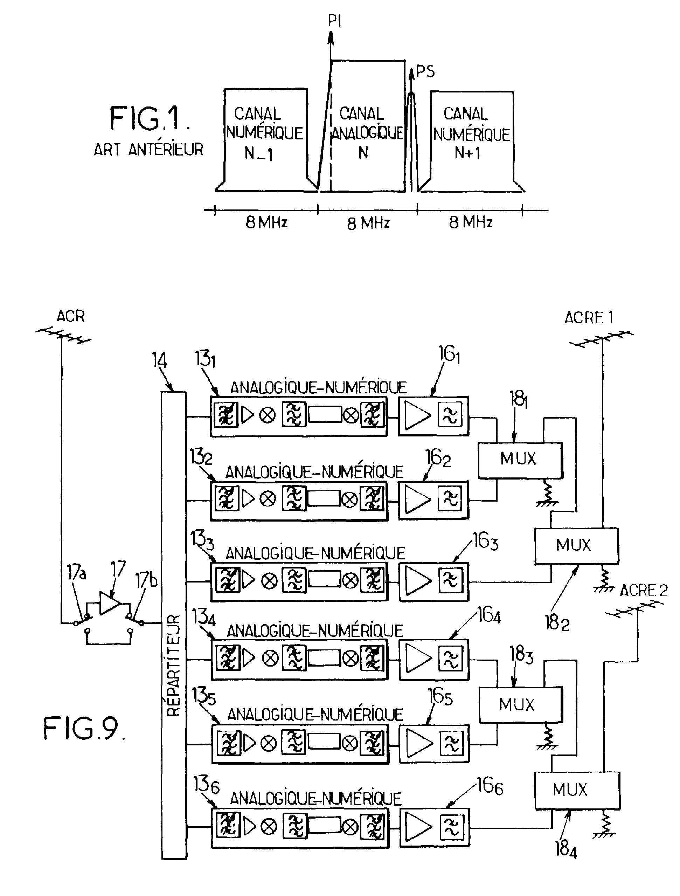

Afin d'optimiser au mieux le plan d'allocation des fréquences précitées, la solution technique, qui est adoptée aujourd'hui pour la mise en oeuvre d'une émission ou réémission numériques sur les sites d'émission/réémission de forte puissance du réseau principal, consiste, ainsi que représenté de manière illustrative à la figure 1, à procéder à un couplage d'un canal numérique DVB-T en canal adjacent inférieur et/ou supérieur à un canal analogique L-SECAM existant, le niveau de puissance des signaux véhiculés par les canaux numériques inférieur et supérieur étant plus faible, d'une dizaine de décibels, par rapport au niveau de puissance des signaux véhiculés par le canal analogique central. Pour un canal analogique d'onde porteuse de fréquence centrale Fo donnée et de largeur de bande égale à 8 MHz, constituant le canal analogique N, le canal numérique supérieur, N+1, occupe une fréquence centrale Fo+8 MHz et une bande de fréquences de largeur de bande ≤ 8 MHz, typiquement égale à 7,6 MHz, alors que le canal numérique inférieur, N-1, occupe une fréquence centrale Fo-8 MHz et une bande de fréquences de même largeur de bande ≤ 8 MHz, typiquement égale à 7,6 MHz. Sur la figure 1, PS désigne la porteuse son et Pi la porteuse image du canal analogique.

La durée de vie des équipements les plus anciens de diffusion des sites de réémission du réseau complémentaire analogique arrivant aujourd'hui à son terme, il est opportun de procéder prochainement à leur renouvellement, et, plus particulièrement, au remplacement des voies de traitement de canal analogique par d'autres voies de traitement qui soient plus performantes. Bien entendu, ce remplacement ne doit pas se faire au détriment d'une élévation trop importante des coûts d'investissement et de maintenance.

La présente invention a pour objet la mise en oeuvre d'une voie modulaire de traitement pour réémission d'un signal radiofréquence de télévision analogique et numérique qui est particulièrement adaptée pour assurer le remplacement d'une voie de traitement de canal analogique existante.

Un autre objet de la présente invention est également la mise en oeuvre d'une voie modulaire de traitement pour réémission d'un signal radiofréquence de télévision analogique et numérique, permettant de transmettre en même temps un signal analogique véhiculé par le canal analogique N et un signal numérique véhiculé par le canal numérique inférieur N-1 ou supérieur N+1 qui est adjacent au canal analogique N, le canal numérique N-1 ou N+1 étant défini en fonction d'impératifs de planification locale.

Un autre objet de la présente invention est également la mise en oeuvre d'une voie modulaire de traitement pour réémission d'un signal radiofréquence de télévision analogique et numérique, permettant de réutiliser les infrastructures des sites de réémission du réseau complémentaire.

Un autre objet de la présente invention est, enfin, la mise en oeuvre d'une voie modulaire de traitement pour réémission d'un signal radiofréquence de télévision analogique et numérique dont le fonctionnement est suffisamment souple afin que cette voie modulaire puisse être associée aux équipements de réémission numérique qui seraient déjà installés sur le réseau complémentaire existant, par simple insertion et en l'absence d'interaction avec ces derniers.

La voie modulaire de traitement pour réémission d'un signal radiofréquence de télévision analogique et numérique de largeur de bande F_{s,} objet de la présente invention, est remarquable en ce qu'elle comporte :
- des premiers moyens de transposition en fréquence dudit signal radioélectrique en signal à fréquence intermédiaire fᵢ, lesdits premiers moyens de transposition délivrant un signal à fréquence intermédiaire fᵢ représentatif du signal transmis sur le canal analogique N et sur l'un des canaux numériques inférieur N-1 respectivement supérieur N+1 ;
- des moyens de filtrage de type passe-bande permettant la transmission sélective d'une bande de filtrage correspondant en fréquence centrale et en largeur de bande à celles du canal analogique N et d'une bande de filtrage correspondant en fréquence centrale et en largeur de bande à celles du canal numérique inférieur N-1 ou supérieur N+1 ;
- des deuxièmes moyens de transposition en radiofréquence recevant ledit signal à fréquence intermédiaire traité et délivrant un signal radiofréquence pour réémission comprenant un signal émis sur le canal analogique N et un signal émis sur l'un des canaux numériques inférieur N-1 respectivement supérieur N+1 ;
- des moyens de commande délivrant respectivement des signaux de commande aux premiers et deuxièmes moyens de transposition en fréquence.

Elle sera mieux comprise à la lecture de la description et à l'observation des dessins ci-après dans lesquels, outre la figure 1 relative à l'art antérieur :
- la figure 2 représente un schéma synoptique d'une première forme de réalisation de la voie modulaire de traitement pour réémission d'un signal radiofréquence de télévision analogique et numérique de largeur de bande Fₛ, objet de la présente invention,
- la figure 3 représente de manière schématique le type de canaux transmis par les moyens de filtrage constitutifs de la première forme de réalisation de la figure 2,
- les figures 4 et 5, de même que les figures 6 et 7, sont des vues respectivement analogues aux figures 2 et 3, pour des seconde et troisième formes de réalisation de la voie modulaire de traitement, objet de la présente invention,
- les figures 8 à 11 représentent respectivement des modes de réalisation préférés de systèmes modulaires de réémission mettant en oeuvre l'une quelconque des voies modulaires de traitement représentées sur les figures 2, 4 et 6.

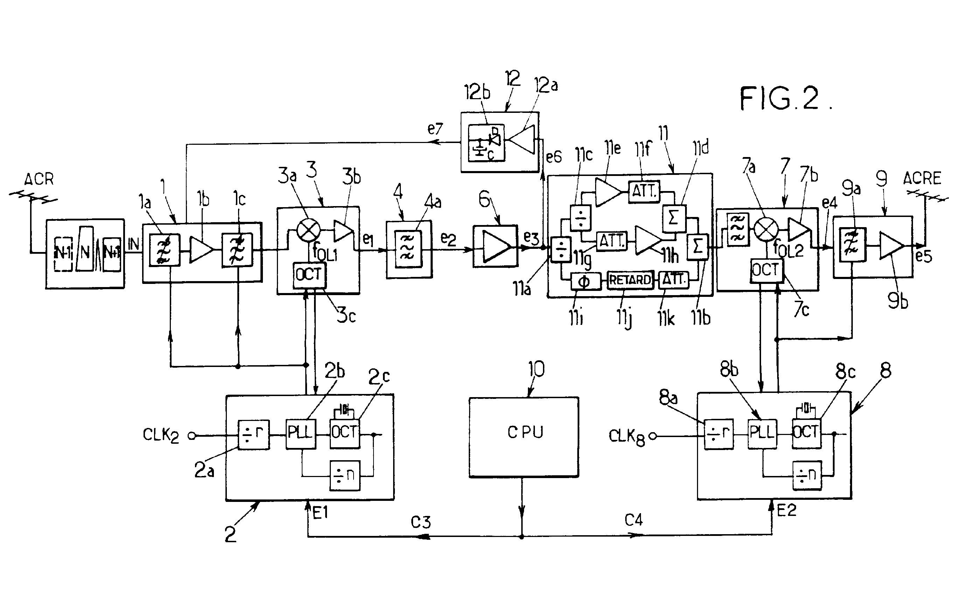

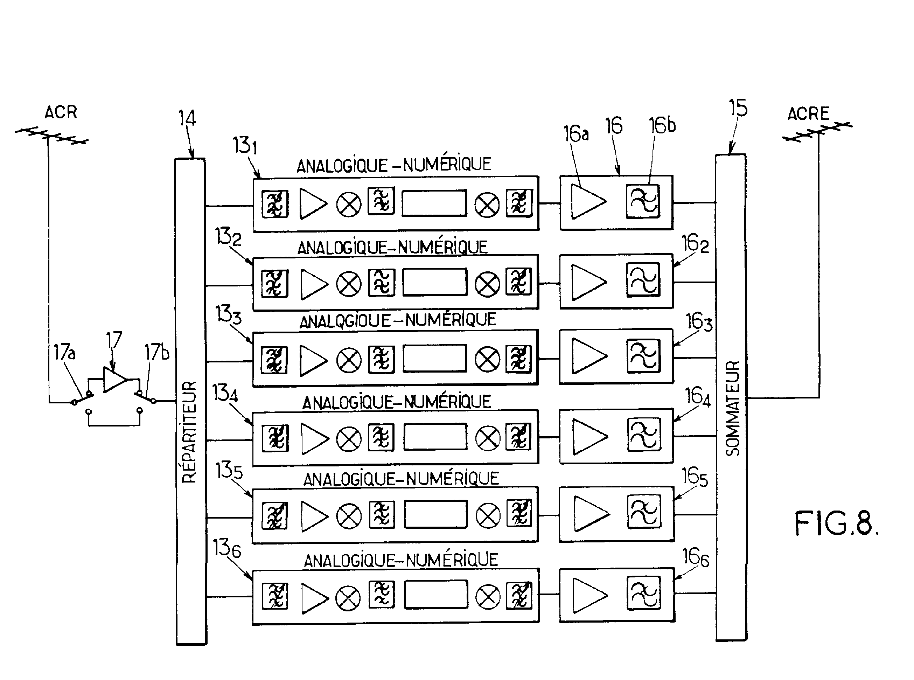

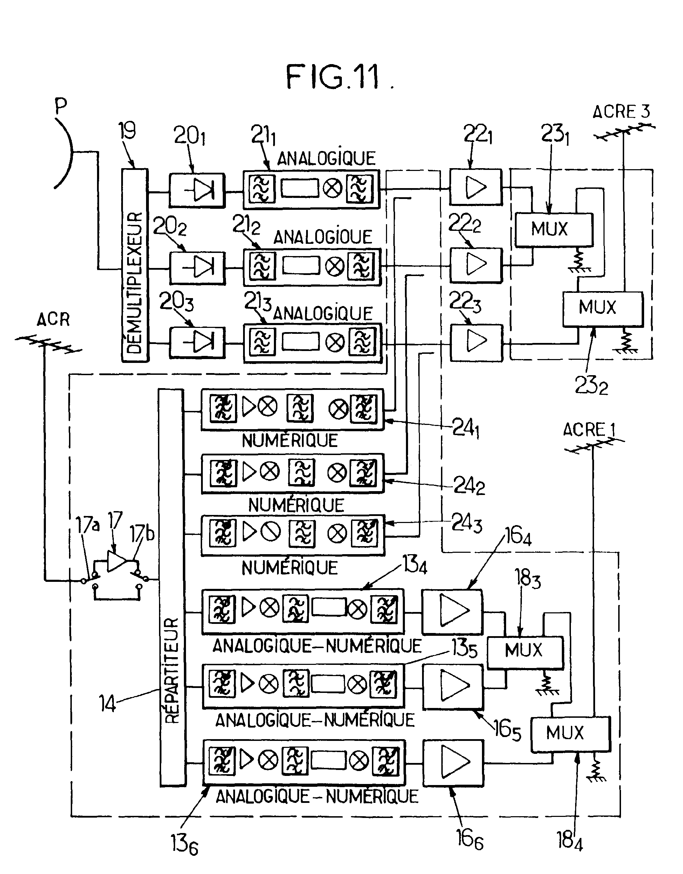

D'une manière générale, la voie modulaire de traitement, objet de la présente invention, est adaptée pour être incorporée dans un équipement de diffusion installé sur un site de réémission existant, tel que ceux représentés sur les figures 8 à 11. On rappelle que, de manière classique, ces sites de réémission sont installés sur le réseau complémentaire afin de permettre la réémission de programmes, par voie hertzienne ou par satellite, en les diffusant à partir d'une antenne de réception ACR et d'une antenne de réémission ACRE. Lorsqu'il s'agit d'une réémission par voie hertzienne, les antennes sont représentées de manière non limitative sous forme d'antennes de type YAGI, comme cela est illustré sur les figures 2, 4, 6, 8 à 11. Lorsqu'il s'agit d'une réémission par satellite, les antennes sont représentées de manière non limitative sous forme d'antennes de type parabolique, comme cela est illustré sur les figures 10 et 11.

Dans une première forme de réalisation représentée sur la figure 2, la voie modulaire de traitement, objet de la présente invention, comprend un amplificateur radiofréquence sélectif 1 ayant son entrée connectée à l'antenne de réception ACR et recevant, en provenance de celle-ci, un signal d'entrée IN qui est un signal radiofréquence de télévision analogique et numérique de largeur de bande Fₛ égale à 16 MHz. Ce signal consiste en un signal véhiculé sur le canal analogique N tel que représenté sur la figure 1 et en un signal véhiculé sur le canal numérique supérieur, N+1, ou le canal numérique inférieur, N-1, tels que représentés également sur la figure 1. Dans cet exemple, le signal d'entrée IN consiste en un signal véhiculé sur le canal analogique N et en un signal véhiculé sur le canal numérique supérieur N+1, le canal numérique inférieur N-1 étant, pour cette raison, représenté en pointillé. L'amplitude nominale du signal analogique est par exemple égale à environ -47 dBm, alors que l'amplitude nominale du signal numérique est avantageusement inférieure d'environ -13 dB par rapport à celle du signal analogique, soit égale à environ -60 dBm. Egalement dans cet exemple, la fréquence d'émission fin des deux signaux analogique et numérique est située dans une plage de fréquences comprise entre 470 et 860 MHz.

L'amplificateur radiofréquence sélectif 1 comprend un filtre passe-bande à accord variable la monté en série avec un amplificateur 1b, lui-même suivi d'un filtre passe-bande à accord variable 1c. Les filtres passe-bande 1a et 1c présentent chacun une largeur de bande B ≥ 16MHz de manière à assurer à la fois le filtrage du signal analogique véhiculé par le canal analogique N et le filtrage du signal numérique véhiculé par le canal numérique N+1.

Plus précisément, l'amplificateur radiofréquence sélectif 1 comprend, de manière connue en soi, deux circuits résonants, constitués respectivement par les filtres de bande 1a et 1c, lesquels sont formés individuellement par une self d'accord montée en parallèle avec une diode Varicap, la tension inverse appliquée aux diodes Varicap étant délivrée par un circuit de synthèse de fréquence 2, dont la structure et le fonctionnement seront décrits plus en détail dans la suite de la description. Ainsi, en fonction de la tension de commande appliquée aux diodes Varicap, l'amplificateur radiofréquence sélectif 1 se positionne sur la fréquence du signal d'entrée IN, c'est-à-dire soit sur la fréquence du signal véhiculé par le canal analogique N et du signal véhiculé par le canal numérique N+1, soit sur la fréquence du signal analogique N et du signal véhiculé par le canal numérique N-1.

La sortie de l'amplificateur radiofréquence sélectif 1 est connectée à l'entrée d'un circuit 3 de changement de fréquence du signal d'entrée IN précité. Le signal el délivré par le circuit 3 est un signal à fréquence intermédiaire fᵢ. Dans cet exemple, la fréquence intermédiaire fᵢ est fixée à 70 MHz.

Plus précisément, le circuit de changement de fréquence 3 comprend un mélangeur 3a et un amplificateur 3b montés respectivement en cascade. Le mélangeur 3a assure le changement de fréquence du signal délivré par l'amplificateur radiofréquence sélectif 1, au moyen d'un signal d'oscillateur local de fréquence fₒₗ₁. Ce signal d'oscillateur local est délivré par un oscillateur commandé en tension (OCT) 3c, la tension de commande imposée à cet oscillateur étant fournie par le circuit de synthèse de fréquence 2. L'oscillateur commandé en tension 3c est conçu pour fonctionner en mode supradyne, c'est-à-dire qu'il fournit une fréquence full qui vérifie la relation fₒₗ₁ = f_{IN} + fᵢ, ceci ayant pour effet d'éviter les problèmes de fréquences conjuguées. A titre indicatif, la fréquence fₒₗ₁ est située dans une plage de fréquences comprise entre 540 et 930 MHz. Le signal obtenu en sortie du mélangeur 3a est un signal modulé et transposé à la fréquence intermédiaire fᵢ qui est alors fourni à l'entrée de l'amplificateur 3b.

L'ensemble constitué par l'amplificateur radiofréquence sélectif 1, le circuit de synthèse de fréquence 2 et le circuit de changement de fréquence 3 constitue un module de transposition en fréquence du signal radioélectrique en signal à fréquence intermédiaire.

La sortie du circuit 3 de changement de fréquence est connectée à l'entrée d'un circuit de filtrage 4. Le circuit 4 est un filtre 4a de type passe-bande, tel que par exemple un filtre LC ou encore un filtre à onde de surface.

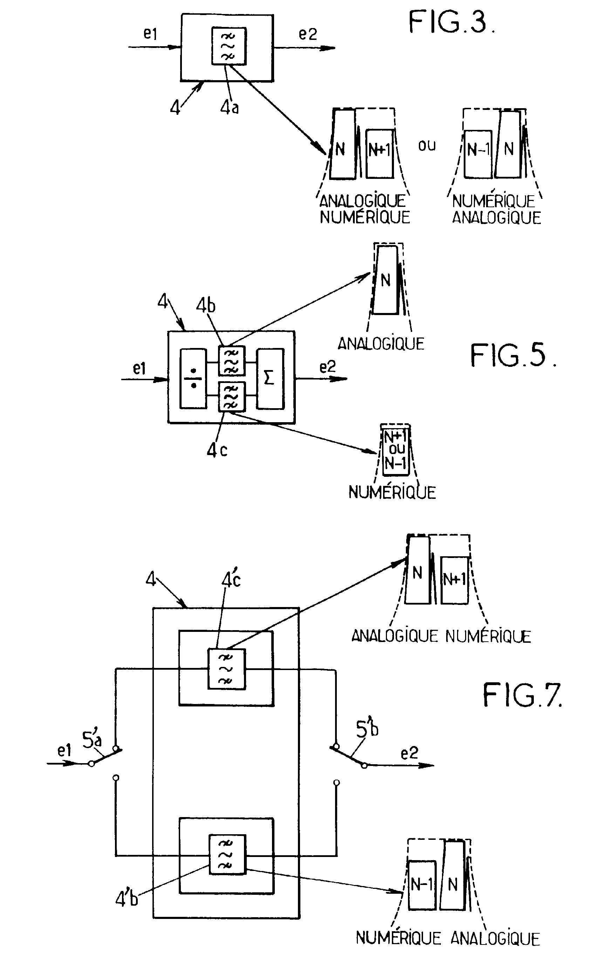

Comme cela est illustré sur la figure 3, le filtre 4a présente une bande de filtrage centrée sur une fréquence appartenant à la largeur de bande du canal analogique N, de préférence la fréquence centrale Fo de ce canal, qui est ici de l'ordre de 70 MHz, et une largeur de bande sensiblement égale à la somme des largeurs de bandes du canal analogique N et du canal numérique inférieur N-1 ou supérieur N+1, ce qui lui permet de transmettre sélectivement, soit les signaux véhiculés respectivement sur les canaux analogique N et numérique N+1, soit les signaux véhiculés respectivement sur les canaux analogique N et numérique N-1.

Le signal numérique constitutif du signal d'entrée IN étant, dans la première forme de réalisation représentée sur la figure 2, véhiculé par le canal numérique N+1, la largeur de bande du filtre 4a est donc sensiblement égale à la somme des largeurs de bandes du canal analogique N et du canal numérique supérieur N+1.

Etant donné que les canaux numériques supérieur N+1 et inférieur N-1 ont des largeurs de bandes identiques, lesquelles valent chacune par exemple 8 MHz, et que ces largeurs de bandes sont elles-mêmes égales à la largeur de bande du canal analogique N, la bande passante du filtre 4a est choisie de manière à être égale à 16 MHz, c'est-à-dire égale à la largeur de bande Fₛ du signal d'entrée IN, pour que le filtre 4a soit aussi bien adapté à la transmission des signaux véhiculés respectivement sur les canaux analogique N et numérique N+1, que des signaux véhiculés respectivement sur les canaux analogique N et numérique N-1.

L'avantage d'un tel filtre 4a réside dans le fait qu'il est capable à lui seul d'effectuer l'un des deux types de transmission précités, tout en présentant une structure très simple qui n'impose pas, notamment lorsqu'il s'agit d'un filtre LC, une grande rigueur du point de vue du filtrage, et qui n'a pas besoin d'être remplacé lorsque les signaux à l'entrée de la voie modulaire sont véhiculés respectivement sur les canaux analogique N et numérique N-1.

Un amplificateur 6 peut être connecté en sortie du filtre 4a de manière à amplifier le signal e2 à fréquence intermédiaire fᵢ traité, afin de délivrer un signal amplifié e3 qui est ensuite fourni à l'entrée d'un circuit 7 de changement de fréquence du signal e3. Le circuit 7 est conçu pour délivrer à l'antenne de réémission ACRE un signal radiofréquence e4 ayant une fréquence f_{OUT} qui est, dans cet exemple, située dans la plage de fréquences comprise entre 470 et 860 MHz.

Le circuit 7 a une structure analogue à celle du circuit 3 de changement de fréquence. Pour cette raison, il ne sera pas à nouveau décrit en détail. Le circuit 7 précité comprend principalement un mélangeur 7a et un amplificateur 7b montés en cascade. Le mélangeur 7a assure le changement de fréquence du signal e3 à fréquence intermédiaire fᵢ par un signal d'oscillateur local de fréquence fₒₗ₂. Ce signal d'oscillateur local est délivré par un oscillateur commandé en tension (OCT) 7c, la tension de commande imposée à cet oscillateur étant fournie par un circuit de synthèse de fréquence 8 ayant une structure analogue au circuit de synthèse de fréquence 2. L'oscillateur commandé en tension 7c génère une fréquence fₒₗ₂ qui, à titre indicatif, est située dans une plage de fréquences comprise entre 540 et 930 MHz. Le signal obtenu en sortie du mélangeur 7a est un signal modulé et transposé en radiofréquence à la fréquence f_{OUT}, l'oscillateur 7c étant conçu pour générer une fréquence fₒₗ₂ qui répond à la relation f_{OUT} = fₒₗ₂-fᵢ. Le signal précité est alors fourni à l'entrée de l'amplificateur 7b qui délivre un signal e4 amplifié.

Un amplificateur 9 est connecté à la sortie du circuit 7 de changement de fréquence et la sortie de cet amplificateur est connectée à l'antenne de réémission par l'intermédiaire d'un amplificateur final (non représenté) qui ne fait pas partie de la voie modulaire de traitement selon l'invention. Cet amplificateur final est simplement destiné à ramener le signal radiofréquence analogique et numérique e5, délivré par l'amplificateur 9, à une puissance adaptée pour permettre audit signal e5 d'être transmis par l'antenne de réémission.

Plus précisément, l'amplificateur 9 est un amplificateur sélectif qui a une structure analogue à celle de l'amplificateur sélectif 1, et qui, pour cette raison, ne sera pas à nouveau décrit en détail. Notons simplement que l'amplificateur 9 comprend un filtre passe-bande à accord variable 9a monté en série avec un amplificateur suiveur 9b. Comme décrit précédemment, l'amplificateur 9 comporte un circuit résonant soumis à une tension de commande qui est, cette fois, délivrée par le circuit de synthèse de fréquence 8. Enfin, pour les mêmes raisons que les filtres passe-bande 1a et 1c, le filtre passe-bande 9a présente une largeur de bande B ≥ F_{s,} cette largeur de bande B étant, ici, égale à 16 MHz.

L'ensemble ainsi constitué par l'amplificateur radiofréquence sélectif 9, le circuit de synthèse de fréquence 8 et le circuit de changement de fréquence 7 constitue un module de transposition en fréquence du signal à fréquence intermédiaire traité en signal radioélectrique.

En ce qui concerne les circuits de synthèse de fréquence 2, 8 représentés sur la figure 2, ces derniers ont une structure tout à fait classique qui est connue des spécialistes de la technique, et qui, pour cette raison, ne sera pas décrite en détail.

D'une manière générale, le circuit de synthèse de fréquence 2 (respectivement 8) comprend une entrée d'horloge CLK₂ (respectivement CLK₈) reliée à l'entrée d'un diviseur 2a (respectivement 8a) . La sortie du diviseur 2a (respectivement 8a) est reliée à l'entrée d'une boucle à verrouillage de phase (PLL) 2b (respectivement 8b), laquelle est montée en série avec un oscillateur commandé en tension (OCT) 2c (respectivement 8c). Les circuits 2 et 8 comportent chacun une autre entrée E1, E2, lesquelles sont destinées à recevoir respectivement des signaux de commande c3, c4 délivrés par une unité centrale 10 qui comprend un microprocesseur, une mémoire de travail et une mémoire ROM (non représentés).

Plus précisément, le diviseur 2a reçoit un signal d'oscillateur local de fréquence full et divise cette fréquence en plusieurs pas de fréquence programmés dont la valeur correspond à la valeur de la largeur de bande du canal analogique N, soit 8 MHz. Le diviseur 8a procède de la même façon vis-à-vis du signal d'oscillateur local de fréquence fₒₗ₂. Ces pas de fréquence sont ensuite fournis, sous forme d'une tension d'accord, aux filtres 1a, 1c et 9a, et, sous forme d'une tension de commande, aux oscillateurs 3c et 7c. Compte tenu de cet asservissement, il est alors possible de positionner, dans le plan de fréquence alloué, soit le canal analogique N et le canal numérique supérieur N+1, soit le canal analogique N et le canal numérique inférieur N-1.

L'unité centrale 10 est conçue pour configurer de la même façon les pas de fréquence délivrés respectivement par les circuits de synthèse de fréquence 2 et 8, en fonction du choix retenu pour le signal d'entrée IN. En d'autres termes, une première tension, dont le niveau logique est fonction du signal d'entrée IN véhiculé sur le canal analogique N et le canal numérique inférieur N-1, et une deuxième tension, dont le niveau logique est fonction du signal d'entrée IN véhiculé sur le canal analogique N et le canal numérique supérieur N+1, sont mémorisées dans la mémoire de travail de l'unité centrale 10. Pour un signal d'entrée IN émis sur le canal analogique N et le canal numérique supérieur N+1, comme c'est le cas dans cet exemple, la deuxième tension logique est lue dans la mémoire de travail, et des signaux de commande sont envoyés en direction des circuits de synthèse de fréquence 2 et 8, le circuit 2 pilotant en conséquence les circuits 1 et 3, et le circuit 8 pilotant en conséquence les circuits 7 et 9. La mémoire de travail peut comporter avantageusement une partie mémoire non volatile. Selon une variante d'exécution, une mémoire reprogrammable électriquement peut être utilisée.

Dans la première forme de réalisation représentée sur la figure 2, la voie modulaire de traitement comporte en outre un circuit 11 de précorrection en fréquence intermédiaire du signal e3, qui est connu en tant que tel. Le circuit 11 est interposé entre la sortie de l'amplificateur 6 et l'entrée du circuit 7 de changement de fréquence.

Le circuit 11 présente une bande passante égale à Fₛ et comprend essentiellement une voie supérieure génératrice de distorsions sur l'amplitude et la phase du signal e3 et une voie inférieure linéaire, lesdites voies étant montées en parallèle entre un diviseur 11a ayant son entrée connectée à la sortie de l'amplificateur 6, et un module 11b additionneur de signaux ayant sa sortie connectée à l'entrée du circuit de changement de fréquence 7.

La voie supérieure précitée comprend deux branches montées en parallèle entre un diviseur 11c ayant son entrée connectée à la sortie du diviseur 11a, et un module 11d additionneur de signaux ayant sa sortie connectée à l'entrée du module additionneur 11b. La branche supérieure se compose d'un amplificateur 11e monté en série avec un atténuateur 11f de façon à amplifier linéairement une première fraction du signal e3. la branche inférieure se compose quant à elle d'un atténuateur 11g monté en série avec un amplificateur 11h de manière à amplifier non linéairement une seconde fraction du signal e3 de façon à engendrer des distorsions sur la phase et l'amplitude de cette dernière.

La voie inférieure du circuit 11 comporte quant à elle un déphaseur 11i, une ligne à retard 11j et un atténuateur 11k montés respectivement en cascade, ce montage étant destiné à compenser les distorsions linéaires relatives à la transmission des première et seconde fractions du signal e3 dans la voie supérieure.

Les signaux issus respectivement des branches supérieure et inférieure de la voie supérieure du circuit 11 sont combinés à 180° par le module 11d, le signal obtenu en sortie de ce module étant ensuite combiné à 0° avec le signal délivré par l'atténuateur 11k de la voie inférieure du circuit 11.

L'avantage d'un tel circuit 11 réside dans le fait qu'il permet d'annuler sensiblement les distorsions affectant l'amplificateur final précité qui est destiné à être interposé entre la sortie de l'amplificateur 9 et l'antenne de réémission. Ceci permet d'augmenter avantageusement le niveau de puissance du signal radiofréquence délivré en sortie de l'amplificateur final. Ainsi, des tests ont pu montrer que le niveau de puissance de ce signal était augmenté de 6 à 7dB.

L'ensemble constitué par le circuit 7 de changement de fréquence, l'amplificateur 9, le synthétiseur de fréquence 8, et, le cas échéant, le circuit 11 de précorrection, lorsque celui-ci est mis en oeuvre, constitue un module de transposition en radiofréquence recevant le signal à fréquence intermédiaire traité et délivrant le signal radiofréquence de réémission comprenant le signal émis sur le canal analogique N et le signal émis sur l'un des canaux numériques supérieur N+1 ou inférieur N-1.

Dans la forme de réalisation représentée sur la figure 2, la voie modulaire de traitement comprend également un circuit 12 de contrôle automatique de gain qui est relié entre la sortie de l'amplificateur 6 et l'entrée de l'amplificateur sélectif 1. Ce circuit permet, de manière connue en soi, de maintenir à un niveau constant le signal e3 à fréquence intermédiaire fᵢ traité, le niveau de puissance du signal d'entrée IN étant susceptible de subir des variations de l'ordre de -10 à +20 dB.

A cet effet, le circuit 12 comprend un amplificateur 12a et un détecteur d'enveloppe 12b de manière à prélever, puis à démoduler, une fraction e6 du signal e3. Dans cet exemple, le détecteur d'enveloppe 12b est constitué par une diode D et un condensateur C ayant une première armature reliée à la cathode de la diode D et une seconde armature reliée à la masse. De cette manière, la fraction e6 du signal e3 est démodulée par la diode D, puis filtrée par le condensateur C de façon à ce que le signal e7, délivré en sortie du circuit 12, soit représentatif du signal émis sur le canal analogique N.

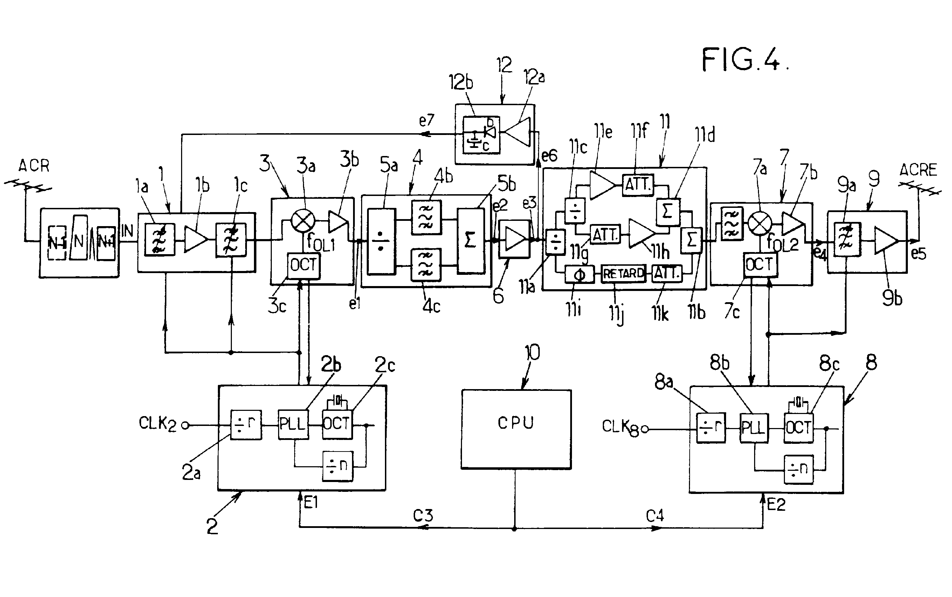

Dans une seconde forme de réalisation de l'invention représentée sur la figure 4, la voie modulaire de traitement est analogue à la voie modulaire de traitement de la figure 2 et s'en distingue essentiellement par la constitution de ses moyens de filtrage 4.

En effet, dans cet exemple, le circuit 4 ne comporte plus un seul filtre mais deux filtres passe-bande 4b et 4c montés en parallèle. Les filtres 4b et 4c sont, dans cet exemple de réalisation, constitués respectivement par des filtres à ondes de surface.

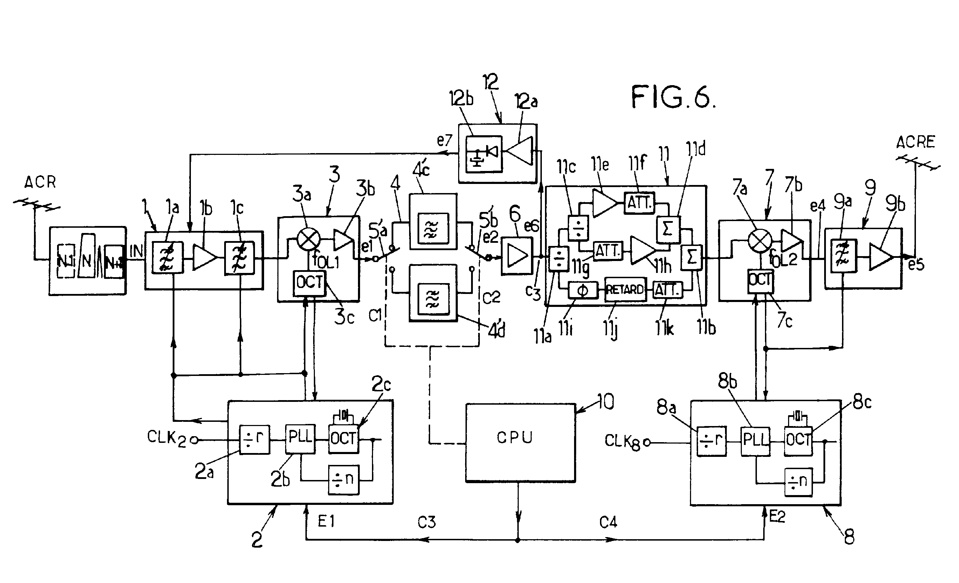

Comme cela est illustré sur la figure 5, le filtre 4b présente une bande de filtrage centrée sur une fréquence appartenant à la largeur de bande du canal analogique N, de préférence la fréquence centrale Fo de ce canal, qui est ici de l'ordre de 70 MHz, et une largeur de bande égale à la largeur de bande de ce canal analogique N. Quant au filtre 4c, il présente une bande de filtrage centrée sur une fréquence appartenant à la largeur de bande du canal numérique inférieur N-1 ou supérieur N+1, de préférence la fréquence centrale de ce canal numérique. Le signal numérique constitutif du signal d'entrée IN étant, dans la seconde forme de réalisation représentée sur la figure 4, véhiculé par le canal numérique N+1, la largeur de bande du filtre 4c est donc sensiblement égale à la largeur de bande du canal numérique supérieur N+1.

Ainsi, de la même façon que dans la première forme de réalisation, l'intérêt de ce montage est de permettre de transmettre sélectivement, soit les signaux véhiculés respectivement sur les canaux analogique N et numérique N+1, soit les signaux véhiculés respectivement sur les canaux analogique N et numérique N-1.

Comme mentionné précédemment, étant donné que les canaux numériques supérieur N+1 et inférieur N-1 ont des largeurs de bandes identiques à celles du canal analogique N, soit par exemple respectivement 8 MHz, la bande passante des filtres 4b et 4c est choisie de manière à être égale à 8 MHz. En outre, les filtres 4b et 4c sont adaptés pour que leurs bandes passantes respectives soient adjacentes.

Un diviseur 5a, constitué par exemple par un répartiteur hybride 90°, est interposé entre la sortie du circuit 3 et chacune des entrées des filtres 4b et 4c de manière à transmettre respectivement la partie numérique et la partie analogique du signal e1 à fréquence intermédiaire fᵢ en direction des filtres 4c et 4b.

Un circuit sommateur 5b, constitué par exemple par un coupleur hybride 90° à 3 dB, est interposé entre chacune des sorties des filtres 4b et 4c et l'entrée du circuit de précorrection 11 de manière à délivrer, sur une largeur de bande égale à 16 Mhz, un signal e2 à fréquence intermédiaire fᵢ traité qui est représentatif du signal transmis par le canal analogique N et l'un des canaux numériques supérieur N+1 ou inférieur N-1, soit, ici, le canal numérique supérieur N+1.

Dans une troisième forme de réalisation de l'invention représentée sur la figure 6, la voie modulaire de traitement est analogue aux voies modulaires de traitement des figure 2 et 4 mise à part le fait qu'elle comporte encore un autre type de circuit de filtrage 4.

Dans cet exemple, il s'agit d'un circuit de filtrage commuté. A cet effet, le circuit 4 comprend en parallèle deux filtres passe-bande 4'b et 4'c. Les filtres 4'b et 4'c sont, dans cet exemple de réalisation, constitués par des filtres à ondes de surface.

Comme représenté sur la figure 7, le filtre 4'b présente une bande de filtrage centrée sur la largeur de bande du canal analogique N et la largeur de bande du canal numérique inférieur N-1, tandis que le filtre 4'c présente une bande de filtrage centrée sur la largeur de bande du canal analogique N et la largeur de bande du canal numérique supérieur N+1. La bande passante de chaque filtre 4'b et 4'c est choisie de manière à être égale à 16 MHz, c'est-à-dire égale à la largeur de bande Fₛ du signal d'entrée IN.
Un premier commutateur 5'a est interposé entre la sortie du circuit 3 et l'entrée des filtres 4'b et 4'c et relie sélectivement le circuit 3 au filtre 4'b ou au filtre 4'c, selon respectivement que le signal el à fréquence intermédiaire fᵢ est représentatif du signal d'entrée IN transmis par le canal analogique N et le canal numérique N-1 ou transmis par le canal analogique N et le canal numérique N+1. Dans l'exemple représenté, le commutateur 5'a est relié au filtre 4'c. De façon analogue, un deuxième commutateur 5'b comporte deux connections indépendantes commandées reliées respectivement à la sortie du filtre 4'b et à la sortie du filtre 4'c, la position de commutation adoptée par le commutateur 5'b devant être identique à celle du commutateur 5'a, de manière à délivrer un signal e2 à fréquence intermédiaire fᵢ traité qui est représentatif du signal transmis par le canal analogique N et l'un des canaux numériques supérieur N+1 ou inférieur N-1. Dans l'exemple représenté, et compte tenu de la position de commutation du commutateur 5'a, le commutateur 5'b est relié au filtre 4'c.

Les commutateurs 5'a et 5'b constituent un module de commutation recevant le signal à fréquence intermédiaire fᵢ et délivrant le signal à fréquence intermédiaire traité représentatif du signal transmis par le canal analogique N et l'un des canaux numériques supérieur N+1 ou inférieur N-1, en fonction de la position de commutation.

Les commutateurs 5'a, 5'b reçoivent respectivement des signaux de commande c1, c2 délivrés par l'unité centrale de traitement (CPU) 10 qui, dans cet exemple, est conçue pour configurer les positions de commutation des commutateurs 5'a, 5'b au choix retenu pour le signal d'entrée IN. Pour un signal d'entrée IN émis sur le canal analogique N et le canal numérique supérieur N+1, comme c'est le cas de l'exemple représenté sur la figure 6, la deuxième tension logique précitée est lue dans la mémoire de travail, et des signaux de commande c1, c2, qui sont fonction de cette deuxième tension logique, sont envoyés respectivement vers les commutateurs 5'a, 5'b qui se connectent alors respectivement au filtre 4'b.

D'après la description qui vient d'être donnée de trois formes de réalisation de la voie modulaire de traitement, objet de la présente invention, il apparaît que la structure et le fonctionnement de cette dernière lui confèrent une très grande souplesse de mise en oeuvre et d'utilisation, puisque pour chacune de ces formes de réalisation, la voie de traitement précitée joue à la fois le rôle d'une voie de traitement analogique et d'une voie de traitement numérique qui permet d'assurer une double fonction en terme de diffusion numérique et de restitution sensiblement fidèle du signal analogique d'origine.

Compte tenu de sa structure proche de celle des voies de traitement analogiques et numériques utilisées actuellement dans les équipements de diffusion des sites de réémission des réseaux complémentaires, la voie modulaire de traitement objet de l'invention est adaptée, sans que cela pose de problèmes particuliers, pour assurer le remplacement des voies de traitement existantes.

En référence aux figures 8 à 11, on va maintenant décrire différents modes de réalisation préférés de systèmes modulaires de réémission existant actuellement sur le réseau complémentaire, dans lesquels sont insérées des voies modulaires de traitement telles que la voie modulaire de traitement, objet de la présente invention.

Dans l'exemple représenté sur la figure 8, la réémission des signaux analogiques et numériques est effectuée uniquement par voie hertzienne. Le système modulaire de réémission, tel que représenté, comporte au moins une voie modulaire de traitement selon la présente invention, par exemple six voies, lesquelles sont représentées schématiquement respectivement par 13₁ à 13₆.

Le système de réémission précité comprend, de manière connue en soi, au moins un circuit 14 répartiteur multivoies connecté entre l'antenne commune de réception ACR et l'entrée de chacune des voies modulaires de traitement 13₁ à 13₆.

En outre, un circuit 15 sommateur multivoies est prévu, l'une au moins des voies d'entrée de ce circuit sommateur multivoies étant connectée à la sortie d'une des voies modulaires de traitement 13₁ à 13₆. La voie de sortie du circuit 15 sommateur multivoies est, quant à elle, reliée à l'antenne commune de réémission ACRE1. L'utilisation du circuit sommateur 15 est, elle aussi, connue en tant que telle.

Le système modulaire selon la présente invention comprend, en outre, plusieurs modules amplificateurs 16₁ à 16₆ associés respectivement aux voies modulaires de traitement 13₁ à 13₆. Les modules amplificateurs 16₁ à 16₆ sont interposés respectivement entre la sortie des voies modulaires de traitement 13₁ à 13₆ et six voies d'entrée du circuit 15 sommateur multivoies. Chaque module amplificateur comporte un amplificateur 16a suivi d'un filtre passe-bas 16b de manière à traiter le signal délivré par chacune des voies modulaires de traitement 13₁ à 13₆, de sorte que ce dernier soit adapté pour la réémission à partir de l'antenne de réémission ACRE1.

Le système modulaire de réémission selon la présente invention, tel que représenté sur la figure 8, est agencé de façon que l'entrée du circuit répartiteur multivoies 14 soit, de façon connue en tant que telle, connectée à l'antenne de réception ACR par l'intermédiaire d'un amplificateur radiofréquence 17 à faible bruit dont l'entrée et la sortie sont connectées respectivement à deux commutateurs 17a et 17b. Ces commutateurs 17a et 17b permettent, en cas de défaillance de l'amplificateur 17, de transmettre tout de même le signal délivré par l'antenne ACR, afin d'assurer la continuité de service.

Ainsi, comme on peut le constater, l'architecture du système de réémission existant ne nécessite aucune transformation importante pour permettre l'introduction des voies modulaires de traitement selon la présente invention à la place des voies analogiques et numériques existantes.

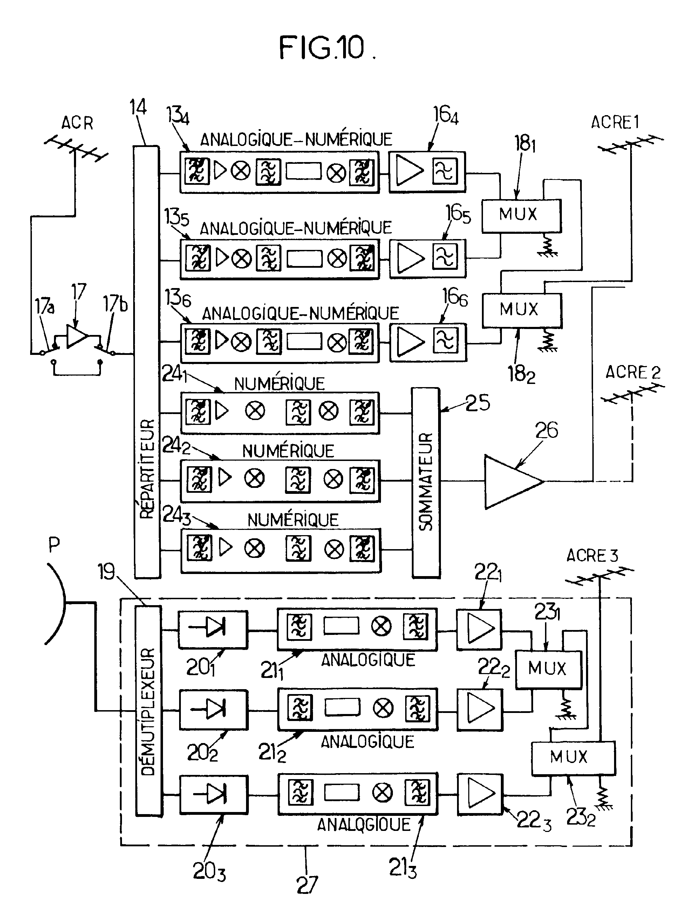

Dans l'exemple représenté sur la figure 9, le système modulaire de réémission selon la présente invention diffère uniquement de celui représenté sur la figure 8 par la nature de la liaison établie entre la sortie de chacun des modules amplificateurs 16₁ à 16₆ et l'antenne de réémission ACRE1.

Au lieu de comporter un circuit sommateur multivoies, le système modulaire de réémission tel que représenté sur la figure 4 comprend au moins un multiplexeur à deux voies, le nombre de multiplexeurs étant lié au nombre de voies de traitement insérées. Ainsi, dans l'exemple représenté, quatre multiplexeurs 18₁ à 18₄ sont utilisés.

D'une façon connue en soi, ces multiplexeurs comportent chacun deux filtres passe-bande à cavités qui sont montés en parallèle entre deux coupleurs 3dB.

Dans l'exemple représenté, l'un des coupleurs du premier multiplexeur 18₁ a une première voie d'entrée dite « large bande » qui est connectée à la sortie de la première voie de traitement 13₁ via le premier module amplificateur 16₁, et une seconde voie « large bande » qui est connectée à la première antenne de réémission ACRE1. L'autre coupleur du multiplexeur 18₁ une première voie d'entrée dite « bande étroite » qui est connectée à la sortie de la deuxième voie de traitement 13₂ via le deuxième module amplificateur 16₂, et une seconde voie qui est reliée à la masse via une résistance de charge de déséquilibre.

Les filtres passe-bande à cavités sont adaptés de façon à être accordés sur la fréquence du canal parvenant sur l'entrée « bande étroite » précitée.

Du fait de l'existence de la troisième voie modulaire de traitement 13_{3,} la seconde voie « large bande » du premier multiplexeur 18₁ est en fait connectée à la première antenne de réémission ACRE1 par l'intermédiaire d'un second multiplexeur 18₂ dont une première voie d'entrée est connectée à la seconde voie « large bande » du premier multiplexeur 18₁, dont une deuxième voie d'entrée est connectée à la sortie de la troisième voie modulaire de traitement 13₃ via le troisième module amplificateur 16₃, et dont une voie de sortie est connectée à la première antenne de réémission ACRE1.

Les trois voies modulaires de traitement suivantes 13₄ à 13₆ sont connectées respectivement de la même façon que les voies de traitement 13₁ à 13₃ à une antenne de réémission supplémentaire ACRE2, par l'intermédiaire des deux multiplexeurs 18₃ et 18₄.

Dans l'exemple représenté sur la figure 10, le système de réémission par voie hertzienne est analogue à celui représenté sur la figure 9, mis à part le fait que trois voies modulaires de traitement, par exemple les voies 13₁ à 13₃, sont remplacées respectivement par trois voies de traitement de canal numériques 24₁ à 24₃. L'entrée de chacune de ces voies de traitement est connectée à une voie de sortie du circuit 14 répartiteur multivoies et la sortie de chacune de ces voies est connectée, de manière connue en soi, à l'antenne de réémission ACRE2 via un circuit 25 sommateur multivoies suivi d'un amplificateur de puissance 26.

Ce système s'avère particulièrement approprié lorsque les voies modulaires de traitement 13₄ à 13₆ utilisées sont conformes à la forme de réalisation représentée sur la figure 2. En effet, en couplant la sortie de l'amplificateur de puissance 26 à l'antenne ACRE1, et en fournissant, à l'entrée de chacune des voies numériques 24₁ à 24₃, un signal représentatif du signal véhiculé sur le canal numérique inférieur N-1, le signal réémis par l'antenne ACRE1 est représentatif d'un triplet de canaux constitué par le canal analogique N et ses deux canaux numériques adjacents N+1 et N-1 respectivement supérieur et inférieur.

En outre, dans l'exemple représenté, il est prévu un équipement 27 de réémission par satellite des signaux analogiques, cet équipement étant représenté en pointillé sur la figure 10. A cet effet, le système de réémission comprend, de manière tout à fait classique, une deuxième antenne de réception P de type parabolique, un démultiplexeur 19 ayant son entrée connectée à l'antenne parabolique P, au moins un démodulateur, par exemple trois démodulateurs 20₁ à 20₃ symbolisés respectivement par des diodes, et au moins une voie de traitement de canal analogique, par exemple trois voies 21₁ à 21₃, les démodulateurs 20₁ à 20₃ étant montés respectivement en série avec les trois voies 21₁ à 21₃ au niveau de trois voies de sortie correspondantes du démultiplexeur 19.

Une antenne de réémission supplémentaire ACRE3 est connectée à la sortie des voies de traitement de canal analogique 21₁ à 21₃ via respectivement trois amplificateurs de puissance 22₁ à 22₃, les sorties des amplificateurs 22₁ et 22₂ étant couplées l'une à l'autre par un premier multiplexeur 23₁, et la sortie de l'amplificateur 22₃ étant couplée à la sortie du multiplexeur 23₁ par un deuxième multiplexeur 23₂.

Dans l'exemple représenté sur la figure 11, le système de réémission est simplement une variante du système de réémission représenté sur la figure 10, selon laquelle les sorties des voies de traitement de canal numérique 24₁ à 24₃ sont couplées respectivement aux sorties correspondantes des voies de traitement de canal analogique 21₁ à 21₃. A cet effet, trois coupleurs (non représentés) sont insérés respectivement entre les trois voies de traitement analogique 21₁ à 21₃ et leurs amplificateurs de puissance associés 22₁ à 22₃. Les trois coupleurs ont chacun une entrée de transmission, une entrée de couplage et une sortie, l'entrée de couplage de chacun des trois coupleurs étant connectée à une sortie correspondante des trois voies de traitement numérique 24₁ à 24₃. Ceci est rendu possible par le fait qu'en raison des caractéristiques spécifiques apportées par les signaux numériques, l'amplitude nominale des signaux véhiculés sur les canaux numériques est diminuée de l'ordre de 13 dB vis-à-vis de l'amplitude nominale des signaux de télédiffusion TV analogiques.

Compte tenu de ce couplage, les multiplexeurs 23₁ et 23₂ seront d'un type analogue aux multiplexeurs 18₁ et 18₂ précités.

Sur l'ensemble des figures 8 à 11, on a représenté un nombre déterminé de voies de manière non limitative. On comprend en particulier que le nombre de voies modulaires de traitement 13₁ à 13₆ selon la présente invention, le nombre de voies de traitement numérique 24₁ à 24₃, et le nombre de voies de traitement analogique 21₁ à 21₃, peuvent être limités respectivement à 1, 2 ou plusieurs en fonction des besoins d'exploitation du réseau de télédiffusion.

Les quatre modes de réalisation qui viennent d'être décrits montrent les multiples possibilités d'intégration de la voie modulaire de traitement, objet de la présente invention, dans les équipements de diffusion existant actuellement sur le réseau complémentaire.

## Revendications

1. Voie modulaire de traitement pour réémission d'un signal radiofréquence de télévision analogique et numérique de largeur de bande Fₛ, ce signal consistant en un signal émis sur un canal analogique N et en un signal émis sur un canal numérique adjacent inférieur N-1 ou supérieur N+1, l'amplitude nominale du signal numérique étant inférieure à l'amplitude du signal analogique, caractérisée en ce qu'elle comporte :
- des premiers moyens de transposition en fréquence (1,2,3) dudit signal radioélectrique en signal à fréquence intermédiaire fᵢ, lesdits premiers moyens de transposition délivrant un signal à fréquence intermédiaire fᵢ représentatif du signal transmis sur le canal analogique N et sur l'un des canaux numériques inférieur N-1 respectivement supérieur N+1 ;
- des moyens de filtrage (4) de type passe-bande permettant la transmission sélective d'une bande de filtrage correspondant en fréquence centrale et en largeur de bande à celles du canal analogique N et d'une bande de filtrage correspondant en fréquence centrale et en largeur de bande à celles du canal numérique inférieur N-1 ou supérieur N+1 ;
- des deuxièmes moyens de transposition en radiofréquence (7,8,9) recevant ledit signal à fréquence intermédiaire traité et délivrant un signal radiofréquence pour réémission comprenant un signal émis sur le canal analogique N et un signal émis sur l'un des canaux numériques inférieur N-1 respectivement supérieur N+1 ;
- des moyens de commande (10) délivrant respectivement des signaux de commande (c3, c4) aux premiers (1, 2, 3) et deuxièmes (7, 8, 9) moyens de transposition en fréquence.

2. Voie de traitement selon la revendication 1, caractérisée en ce que les premiers (1,2,3) et deuxièmes (7,8,9) moyens de transposition en fréquence comprennent au moins :
- un circuit de changement de fréquence (3a;7a) muni d'un oscillateur commandé en tension (3c;7c) ;
- un circuit de synthèse de fréquence (2;8), délivrant des pas de fréquence dont la valeur correspond à la valeur de la largeur de bande du canal analogique N;
- au moins un filtre passe-bande à accord variable (1a,1c;9a) présentant une largeur de bande B ≥ F_{s,} ledit filtre passe-bande à accord variable étant connecté en amont respectivement en aval du circuit de changement de fréquence (3;7), pour constituer les premiers (1,2,3) respectivement les deuxièmes (7,8,9) moyens de transposition de fréquence, ledit circuit de synthèse de fréquence (2;8) recevant un signal de commande (c3;c4) desdits moyens de sélection (10), ainsi qu'un signal de tension en provenance dudit oscillateur commandé en tension (3c ;7c), et délivrant lesdits pas de fréquence audit oscillateur commandé en tension (3c;7c) et un signal de commande d'accord audit filtre passe-bande (1a,1c ;9a) à accord variable.

3. Voie de traitement selon la revendication 1 ou 2, caractérisée en ce que lesdits moyens de filtrage (4) comportent un filtre unique (4a) présentant une bande de filtrage centrée sur une fréquence appartenant à la largeur de bande du canal analogique N et de largeur de bande sensiblement égale à la somme des largeurs de bandes du canal analogique N et du canal numérique inférieur N-1 ou supérieur N+1.

4. Voie de traitement selon la revendication 3, caractérisée en ce que ledit filtre unique (4a) est choisi dans le groupe comprenant un filtre LC et un filtre à onde de surface.

5. Voie de traitement selon la revendication 1 ou 2, caractérisée en ce que lesdits moyens de filtrage (4) comportent en parallèle un premier filtre (4b) présentant une bande de filtrage centrée sur une fréquence appartenant à la largeur de bande du canal analogique N et de largeur de bande égale à la largeur de bande de ce canal analogique, un deuxième filtre (4c) présentant une bande de filtrage centrée sur une fréquence appartenant à la largeur de bande de l'un des canaux numériques inférieur N-1 et supérieur N+1 et de largeur de bande égale à celle de ce canal numérique, et des moyens sommateurs (5b) recevant le signal délivré par les premier (4c) et deuxième (4b) filtres.

6. Voie de traitement selon la revendication 1 ou 2, caractérisée en ce que les moyens de filtrage (4) comportent en parallèle un premier filtre (4'b) présentant une bande de filtrage centrée sur la largeur de bande du canal analogique N et la largeur de bande du canal numérique inférieur N-1 et un deuxième filtre (4'c) présentant une bande de filtrage centrée sur la largeur de bande du canal analogique N et la largeur de bande du canal numérique supérieur N+1, les premier (4'b) et deuxième (4'c) filtres étant commutés par des moyens de commutation (5'a,5'b), ces derniers recevant ledit signal à fréquence intermédiaire fᵢ et délivrant ce signal à fréquence intermédiaire au premier (4'b) respectivement au deuxième filtre (4'c), en fonction de la position de commutation de ces moyens de commutation, lesdits moyens de filtrage commuté (4) délivrant un signal à fréquence intermédiaire traité représentatif du signal transmis par le canal analogique N et l'un des canaux numériques supérieur N+1 ou inférieur N-1 en fonction de cette position de commutation.

7. Voie de traitement selon l'une des revendications 6, caractérisée en ce que ladite position de commutation est sélectionnée par les moyens de commande (10), lesquels délivrent respectivement des signaux de commande (c1 et c2) aux moyens de commutation (5a et 5b).

8. Voie de traitement selon les revendications 5 à 7, caractérisée en ce que les premier (4b;4'b) et deuxième (4c;4'c) filtres sont constitués respectivement par des filtres à ondes de surface.

9. Voie de traitement selon l'une quelconque des revendications 1 à 8, caractérisée en ce que lesdits moyens de commande (10) sont constitués par un microprocesseur, une mémoire de travail et une mémoire ROM.

10. Voie de traitement selon l'une quelconque des revendications 1 à 9, caractérisée en ce que des moyens de précorrection en fréquence intermédiaire (11) sont interposés entre la sortie desdits moyens de filtrage (4) et l'entrée desdits deuxièmes moyens de transposition en radiofréquence (7, 8, 9) .

11. Voie de traitement selon la revendication 10, caractérisée en ce que lesdits moyens de précorrection (11) comprennent une voie (11e,11f,11g,11h) génératrice de distorsions sur la phase et l'amplitude du signal à fréquence intermédiaire fᵢ traité.

12. Voie de traitement selon l'une quelconque des revendications 1 à 11, caractérisée en ce que celle-ci comporte en outre un circuit CAG (12) relié entre la sortie desdits moyens de filtrage (4) et un amplificateur sélectif (1) constitutif des premiers moyens de transposition en fréquence (1,2,3), le signal délivré par le circuit CAG étant représentatif du signal émis sur le canal analogique N, ledit circuit CAG délivrant un signal de contrôle automatique de gain au filtre passe-bande (1a).

13. Système modulaire de réémission de plusieurs canaux analogiques et numériques reçus sur au moins une première antenne de réception (ACR) à partir d'au moins une première antenne de réémission (ACRE1, ACRE2), caractérisé en ce qu'il comprend au moins une voie de traitement (13₁-13₆) selon la revendication 1, connectée entre la première antenne de réception (ACR) et la première antenne de réémission (ACRE1, ACRE2).

14. Système selon la revendication 13, caractérisé en ce qu'il comprend au moins:
- un répartiteur multivoies (14) connecté entre la première antenne de réception et l'entrée de chacune desdites voies de traitement ;
- un circuit (15) sommateur multivoies ayant au moins une voie d'entrée connectée à la sortie d'une desdites voies de traitement et une voie de sortie connectée à ladite première antenne de réémission.

15. Système selon la revendication 13, caractérisé en ce qu'il comprend au moins :
- un répartiteur multivoies (14) connecté entre la première antenne de réception et l'entrée de chacune desdites voies de traitement ;
- au moins un multiplexeur (18₁-18₄) ayant une première voie d'entrée connectée à la sortie d'une première desdites voies de traitement, une deuxième voie d'entrée connectée à la sortie d'une deuxième desdites voies de traitement, et une voie de sortie connectée à la première antenne de réémission.

16. Système selon la revendication 13, caractérisé en ce qu'il comprend au moins :
- une deuxième antenne de réception (P) ;
- un démultiplexeur (19) ayant son entrée connectée à cette deuxième antenne ;
- au moins un démodulateur (20₁-20₃) et une voie de traitement de canal analogique (21₁-21₃) montés en série à la sortie du démultiplexeur (19) ;
- une deuxième antenne de réémission (ACRE3) connectée à la sortie de la voie de traitement de canal analogique ;
- au moins une voie de traitement de canal numérique (24₁-24₃), dont l'entrée est connectée à une voie de sortie dudit répartiteur multivoies (14) et dont la sortie est connectée à l'une quelconque desdites première (ACRE1,ACRE2) et deuxième (ACRE3) antennes de réémission.

17. Système selon la revendication 16, caractérisé en ce qu'il comprend un coupleur à une entrée de transmission, une entrée de couplage et une sortie, inséré entre la sortie de ladite voie de traitement de canal analogique (21₁-21₃) et la deuxième antenne de réémission (ACRE3), l'entrée de couplage étant connectée à la sortie de la voie de traitement numérique (24₁-24₃), le signal numérique délivré par ladite voie de traitement numérique ayant une amplitude nominale inférieure à l'amplitude nominale du signal analogique délivré par ladite voie de traitement analogique.
